## Europäisches Patentamt
## European Patent Office
## Office européen des brevets

(19)

(11) Publication number: **0 014 090**
**B.1**

(12)

# EUROPEAN PATENT SPECIFICATION

(45) Date of publication of patent specification: **31.08.83**

(51) Int. Cl.³: **G 01 N 27/12**

(21) Application number: **80300193.2**

(22) Date of filing: **22.01.80**

(54) Exhaust gas sensor.

(30) Priority: **22.01.79 US 5423**

(43) Date of publication of application:
**06.08.80 Bulletin 80/16**

(45) Publication of the grant of the patent:
**31.08.83 Bulletin 83/35**

(84) Designated Contracting States:
**DE FR GB**

(56) References cited:
**FR - A - 2 333 240**
**FR - A - 2 340 548**
**US - A - 3 835 012**
**US - A - 3 844 920**
**US - A - 3 960 693**
**US - A - 4 098 653**
**US - A - 4 111 778**

**SOCIETY OF AUTOMOTIVE ENGINEERS, vol. 87, no. 3, 1979, pages 88—94 "Titania: a new option"**

(73) Proprietor: FORD MOTOR COMPANY LIMITED
Eagle Way
Brentwood Essex CM13 3BW (GB)
(84) GB
(73) Proprietor: FORD-WERKE AKTIENGESELLSCHAFT
Ottoplatz 2 Postfach 21 03 69
D-5000 Köln 21 (DE)
(84) DE
(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: Springer, Jerry Lee
38227 Ross
Livonia Wayne County Michigan 48154 (US)
Inventor: Wells, Charles Marvin
29609 Oakview
Livonia Wayne County Michigan 48154 (US)

(74) Representative: Messulam, Alec Moses et al,
A. Messulam & Co. 24 Broadway
Leigh on Sea Essex SS9 1BN (GB)

Courier Press, Leamington Spa, England.

EP 0 014 090 B1

Exhaust gas sensor

This invention relates to exhaust gas sensors.

Exhaust gas sensors are adapted for installation in a conduit for conveying exhaust gases from an internal combustion engine and are responsive to the partial pressure of oxygen in the exhaust gases to which the sensor is exposed by virtue of the fact that the sensor includes an element which has an electrical characteristic which varies, when the sensor is at operating temperatures in the range from about 350°C to about 850°C, with the partial pressure of oxygen in the exhaust gases.

Exhaust gas sensors have been fabricated using either a ceramic zirconia tube or a titania oxygen sensing element of a disc shape, the latter having electrode wires in embedded in the titania disc. Both sensor types convey to an electronic control system information concerning variations in an electrical characteristic of the oxygen sensing element as the composition of the exhaust gases from an internal combustion engine is varied. In the case of titania sensor, electrical lead wires and the titania oxygen sensing element are supported by a ceramic member mounted within a steel body that in use is attached to the exhaust conduit of an engine. The sensor is subjected to exhaust gases of varying composition, and a consequentially varying electrical signal passes from the sensing element to terminal pins at the end of the ceramic member. It has been found necessary with the exhaust gas sensor of this design to provide a seal between the steel body and the ceramic member and also to provide a perforated protection tube that surrounds the portion of the ceramic member designed to project into the exhaust conduit.

Protection tubes for exhaust gas oxygen sensor devices are known, as may be seen for example in U.S. Patent No. 4,001,758. The above-mentioned patent relates to a titania exhaust gas sensor. Other sensor types are known as is evidenced by U.S. patents Nos. 3,891,529, 3,841,987 and 3,978,006. These patents illustrate various designs and arrangements for exhaust gas sensors of the zirconia type. U.S. Patent 3,891,529 illustrates a protection tube used in connection with a zirconia ceramic member and the sealing arrangement achieved between the protection tube and the zirconia member, which in this type of device is responsive to the partial pressure of oxygen. It should be noted that the zirconia sensors apply a tubular element which must be sealed on one side from the exhaust gases which on the other side must be subjected thereto. The side of the zirconia sealed from the exhaust gases is supplied with a reference gas, usually with air, and the exhaust sensor output electrical signal is obtained as an EMF generated across platinum electrode material applied on opposite side of the zirconia tube to hold a platinum surface on its exterior in electrical contact with the steel body or with the protection tube surrounding the zirconia tube. Spring pressure may be used for this purpose.

US Patent 4 111 778 discloses a sensor in which a zirconia sensor element has a central portion mounted within a metal body. A tubular portion of the sensor element extending from one side of the central portion is protected by a protection tube retained in position by a flange which extends between the body and one side of the central portion of the sensor element. The seal between the sensor element and the body is effected by compression of sealing elements between the other side of the central portion and the metal body.

US Patent 4098653 discloses a similar arrangement in which a protection tube is held in place by a flange which extends between a metal body and a central position of the sensor element. The seal however is achieved by tightly fitting the sensor element into the metal body.

In accordance with a first implementation of the present invention, there is provided an exhaust gas sensor comprising a body adapted for connection to an exhaust gas conduit and provided with a circumferential groove on its outer surface; a ceramic member retained in a central aperture in the body and having one end projecting therethrough for location in the exhaust gas conduit; and a protector surrounding the said one end of the ceramic member, the protector including a flange which extends between the body and the ceramic member whereby the protector is secured and sealed in a gas tight manner to the body and the ceramic member, characterised in that the opposite sides of the flange are in direct contact with the body and the ceramic member respectively and the flange is compressed thereby forming a gastight seal between the body and the ceramic member, and in that the groove is positioned directly radially outwardly of the flange.

In accordance with a second implementation of the present invention, there is provided an exhaust gas sensor of the type adapted for installation in a conduit for conveying exhaust gases from an internal combustion engine, the sensor having an oxygen sensing component responsive to the partial pressure of oxygen in the exhaust gases to which the sensor is exposed, the component having an electrical characteristic which varies when at operating temperatures in the range from about 350°C to about 850°C with the partial pressure of oxygen in the exhaust gases, the sensor moreover comprising firstly a body adapted for connection to the exhaust conduit of an internal combustion engine, the body having an aperture extending axially through it, the aperture having at least two portions of different diameter and a transition surface extending between the two diameters thereof, the larger diameter portion of the aperture having an end thereof suitable for crimping in a radially inward direction; secondly a ceramic member having a projecting portion adapted to extend into the exhaust conduit and to support the oxygen sensing component and a central portion the ceramic member being of generally circular cross-section along its length, the central portion being of diameter greater than the diameter of the projecting portion and being received within the larger diameter portion of the aperture such that the projecting portion is adapted to project into an exhaust conduit when the body is installed therein, the projecting portion of the ceramic member extending beyond the small diameter portion of the aperture and thirdly a cylindrical metal protection tube having perforations therein to permit exhaust gases to enter, the protection tube being received within the smaller diameter portion of the aperture and surrounding the projecting portion of the ceramic member extending beyond the body, characterised in that the protection tube has a flange extending in a radially outward direction, one side of the flange of the protection tube being in direct contact with the transition surface of the aperture and the other side of the flange being in direct contact with a mating portion of the ceramic member, the larger diameter portion of the aperture being crimped at its end to produce a clamping force between the body and the ceramic member acting upon the flange of the protection tube, thereby to produce a seal that prevents flow of exhaust gases from the region in the protection tube between it and the projecting portion of the ceramic member through the area between the ceramic member central portion and the body, and in that the body has a circumferential groove in its external surface directly radially outwardly of the flange of the projection tube.

By using the flange of the protection tube to form the seal between the ceramic member and the body, the sealing arrangements can be considerably simplified. The presence of the groove in the external surface is however important in ensuring the integrity of the seal at high temperatures since the groove assists in removing heat from the vicinity of the flange.

More specifically, in accordance with the above said second implementation of the invention, the exhaust gas sensor has a body adapted for connection to the exhaust conduit of an internal combustion engine. The body has an axial bore extending through it and has at least two portions of different bore diameter each extending over a length of the body bore. The body bore has a transition surface extending between the two diameters thereof, the larger diameter portion of the body having an end suitable for crimping in a radially inward direction. The ceramic member preferably has a projecting portion adapted to extend into the exhaust conduit. A central portion also is provided, and the ceramic member is of generally circular cross-section along its length. The central portion of the ceramic member is of diameter greater than the diameter of its projecting portion. The central portion of the ceramic member is received within the larger bore-diameter portion of the body such that the projecting portion is adapted to extend into an exhaust conduit when the body is installed therein as adapted for this purpose. The projecting portion of the ceramic member extends axially beyond the smaller bore-diameter portion of the body.

The projector is preferably in the form of a cylindrical metal protection tube having perforations in it to permit exhaust gases to enter and has a flange extending in a radially outward direction. The protection tube is received within the smaller bore-diameter portion of the body and surrounds the projecting portions of the ceramic member. The flange of the projection tube is located adjacent the transition surface of the body bore and is contacted by a mating portion of the ceramic member.

In order to provide a force to achieve a sealing relationship between the radially extending flange of the protection tube and the body and ceramic member by which it is contacted on opposite sides, the end of the larger bore-diameter portion of the body is preferably crimped. This produces a clamping force between the body and the ceramic member. This force acts upon the flange of the protection tube, thereby, to produce a seal that prevents flow of exhaust gases from the region in the protection tube between it and the projecting portion of the ceramic member. This flow of exhaust gases would take place through the area between the ceramic member and the central portion of the body in the absence of the seal formed in accordance with the invention.

From the above, it is apparent that the protection tube not only protects the ceramic member, but also acts to form a seal between the ceramic member and the steel body. This eliminates sealing rings previously required for this purpose.

A preferred embodiment of the invention will now be described, by way of example only, with reference to the accompanying drawings, in which:—

Figure 1 is an elevational view of a titania exhaust gas oxygen sensor suitable for installation in the intake manifold of an internal combustion engine;

Figure 2 is a sectional end view, taken along the line II—II in Figure 1, and is shown in enlarged scale;

Figure 3 is a sectional view, taken along the line III—III in Figure 2, showing the internal structure of the sensor of Figures 1 and 2 also on an enlarged scale; and

Figure 4 is a circuit diagram illustrating the manner in which the titania oxygen sensing element and the thermistor shown in Figures 1 through 3 are electrically connected with circuitry designed to receive the sensor output voltage.

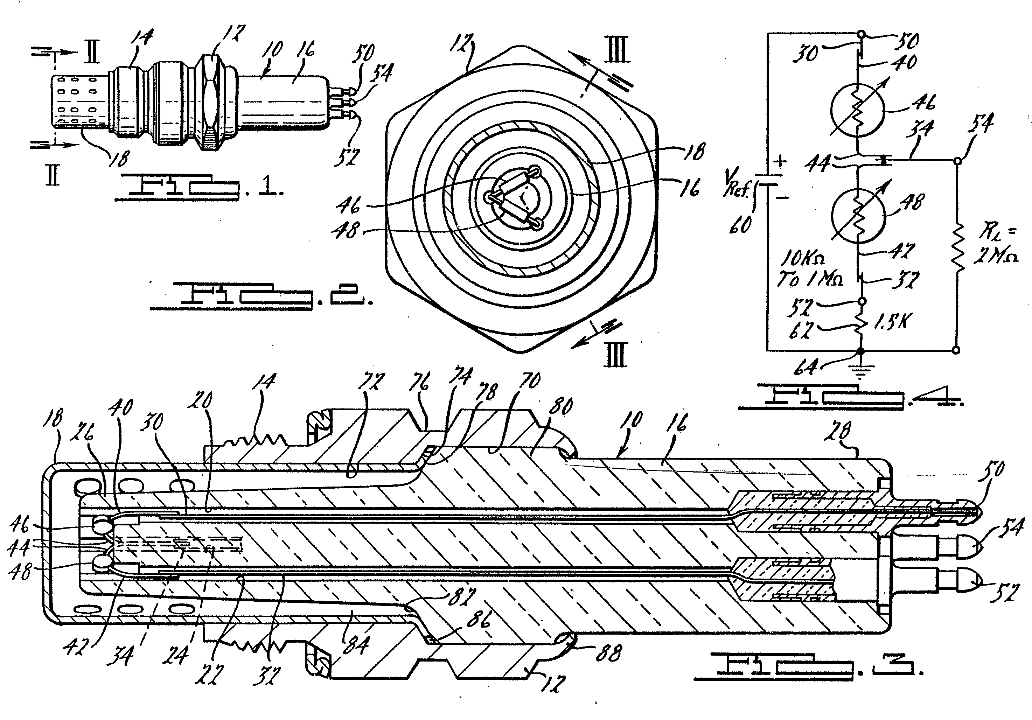

With particular reference now to Figures 1 through 3, wherein like numerals refer to like parts in the several views, there is shown a complete titania exhaust gas sensor assembly generally designated by the numeral 10. The sensor 10 includes a steel body 12, which may be substantially identical to a commercially available spark plug body, having a threaded portion 14 for engagement with a suitably threaded aperture provided within the exhaust system of an internal combustion engine (not shown). In most cases, the sensor 10 would be installed in an aperture at a location in the exhaust manifold or conduit near the flange that would connect to an exhaust pipe. A ceramic member or insulator 16 of generally circular cross-section extends through the body 12 and has a tapered portion 26 projecting outwardly from the body 12 into the volume defined by the boundaries of a perforated shield or protection tube 18. The projecting portion 26 of the ceramic insulator, among other things, acts as a support structure for an oxygen sensing element 46 and a thermistor 48. There are three longitudinal passages 20, 22 and 24 extending from the projecting end 26 of the ceramic insulator to its opposite terminal portion or end 28. Wires 30, 32 and 34 are located in the respectively corresponding passages 20, 22 and 24 and are of a heat resistant character, preferably being made from an alloy such as 80% nickel—20% chromium wire. These electrically conductive wires are welded to precious-metal wire leads 40, 42 and 44, which are embedded in the disc-shaped ceramic, metal-oxide oxygen sensing and thermistor elements 46 and 48.

Element 46 is a ceramic titania $O_2$ sensor responsive to the partial pressure of oxygen in the gaseous medium to which this element is exposed. Sensor element 46 for example may be fabricated in accordance with the teachings of U.S. patents Nos. 3,886,785 and 3,932,246.

The element 48 is a thermistor. The thermistor may be made from titania ceramic material of greater density, near its theoretical density, than the density of the porous titania oxygen sensor 46. Alternatively, the thermistor 48 may be constructed in accordance with the teachings of our copending European Patent Application No. 78300727.1 (publication No. 0002375). The thermistor 48 is intended to provide temperature compensation in accordance with the circuitry illustrated in Figure 4 and is intended to be substantially non-responsive to variations in the partial pressure of oxygen in the gaseous medium to which it is exposed.

The sensor of Figures 1 through 3 is intended to be used in conjunction with electronic circuitry for closed-loop feedback control of the amount of fuel supplied to an internal combustion engine. The sensor indicates whether the exhaust gases contain a substantial amount of HC and CO or whether instead there is a substantial amount of $CO_2$, $H_2$ and $O_2$, thereby, indicating whether or not the air/fuel ratio of the mixture supplied to the engine was rich to lean with respect to the stoichiometric value of about 14.7 parts of air to each part of fuel by weight. This air/fuel ratio typically is expressed as a normalized air/fuel ratio lambda, wherein the actual ratio is divided by the stoichiometric value and the stoichiometric ratio therefore is represented as 1.0 in accordance with well known practice.

The ceramic metal oxide elements 46 and 48 operate over a temperature range extending from about 350°C to 850°C. These elevated temperatures are produced primarily as a result of the location of the exhaust gas oxygen sensor 10 in the exhaust stream of an internal combustion engine. The sensor, therefore, is subjected repeatedly to wide variations in temperature. When installed in a motor vehicle, the sensor 10 may be subjected to environmental temperatures as low as —40°C. When the vehicle is placed in operation, this temperature may rise to 500° to 600°C in a very short time. Cyclical heating and cooling of the sensor 10 may occur several times each day in typical motor vehicle usage.

In prior art titania exhaust gas sensor designs, there was a need to utilize one or more rings of material to achieve a seal between the body portion of the exhaust gas sensor and its associated ceramic member or insulator, as is shown in the aforementioned U.S. Patent 4,001,758. In sensors of this type, the seal prevents exhaust gases within the protecttion tube from flowing, through the space between the body and the ceramic member, to the atmosphere.

The present invention is an improvement over the seal and protection tube arrangement of prior art exhaust gas sensors having ceramic members mounted within steel bodies. According to an aspect of the invention, the protection tube 18, which in previous designs would have been welded to the body 12, is provided with a flange which not only serves to retain the protection tube in its proper position, but which also serves to provide a deformable sealing material between the body 12 and the ceramic member 16. This eliminates any requirement for a separate sealing material or component.

The preferred design of the exhaust gas oxygen sensor improved protection tube and sealing arrangement is best shown in Figure 3. The sensor body 12 has axially-extending bore of varying diameter in which the protection tube 18 and ceramic insulator 16 are positioned in cooperative relationship. The bore in the body has a larger-diameter portion 70, a smaller-diameter portion 72 and a portion 74 forming a transition surface extending between the larger and smaller diameter portions of the bore. On the exterior portion of the body, a groove 76 is provided in a location adjacent the transition surface of the bore. Because the seal between the body 12 and the ceramic member 16 is formed in the area of the bore transition, the groove aids in removing heat from the seal region due to the reduction in body material at this location. The seal is effected with the use of radially-extending flange 78 that is provided on the protection tube 18.

The central portion 80 of the ceramic member 16 is received by the body 12 in its portion 70 having the larger bore diameter. Located between the transition surface of the bore in body 12 and the mating surface 82 of the ceramic member is the flange 78 of the protection tube 18. The direct contact of the body and the mating portion of the ceramic member with the flange maintains a clamping force on the flange which forms a seal. This prevents exhaust gases within the area 84, between the prtection tube and the projecting portion of the ceramic member, and also between the protection tube and the body, from flowing through the area between the ceramic member central portion 80 and the body 12. During assembly of the exhaust gas oxygen sensor, the flange 78 is clamped between the body and ceramic member as shown. The end portion 88 of the body larger bore-diameter portion is crimped radially inwardly over the central portion of the ceramic member to maintain the axial clamping force on the flange. This produces some deformation of the protection tube flange in conformity with the surfaces it contacts. The protection tube may be fabricated from SAE type 310 stainless steel having a thickness of 0.5 mm. Ceramic material conventionally used to form spark plug insulators may be used in fabricating the ceramic member 16 used in the illustrated titania exhaust gas sensor. A space 86 between these components and the steel body 12 accommodates the deformation of the protection tube flange.

The exhaust gas sensor 10 has terminals 50, 52 and 54 designed for connection to external circuitry as specified above to enable it to be used in a feedback fuel control system. With particular reference now to Figure 4, there is shown a circuit that schematically represents the manner in which the sensor 10 is utilized in association with such external circuitry. A DC source of regulated reference voltage 60 has its positive terminal connected to terminal 50 of the sensor oxygen responsive element 46. The lead wires 40, 42 and 44 from the sensor 46 and thermistor 48 are welded or otherwise joined, respectively, to lead wires 30, 32, and 34 to interconnect the two ceramic elements 46 and 48 as shown. The thermistor element 48 is connected through a response shaping resistor 62 to ground potential at 64. The output voltage of the sensor 10 is taken between the sensor terminal 54 and ground potential. This signal is applied across the input impedance or load resistance $R_L$ (about two megohms) of the engine control electronic circuitry.

The input voltage to the circuit of Figure 4 is obtained from the source reference 60 and is applied across the voltage divider comprising the series-connected variable resistances of oxygen sensor 46 and thermistor 48 in series with the response-shaping resistor 62. The output voltage is taken across the load resistance $R_L$.

The resistance values of both the oxygen sensor 46 and the thermistor 48 vary as a function of temperature and in the same direction, that is, the resistance of these elements decreases with increasing temperature. As a result, the voltage dividing effect provides an output voltage across the load resistance $R_L$ that is independent of temperature. The oxygen sensor 46, however, has a resistance which varies not only with temperature but also with the partial pressure of oxygen in the gaseous medium to which the sensor is exposed. An increase in the resistance of the oxygen sensor 46 causes the output voltage across the load $R_L$ to decrease, and a reduction in the resistance of the oxygen sensor causes a corresponding increase in the output voltage across the resistance $R_L$. Otherwise stated, an increase in oxygen content in the gaseous medium surrounding the oxygen sensing device 46 causes its resistance to increase and thereby causes a reduction in the voltage across the load resistance $R_L$. A decrease in the oxygen content of the gaseous medium causes the resistance of the oxygen sensor 46 to decrease in a corresponding manner and this causes an increase in the voltage across the load resistance $R_L$.

**Claims**

1. An exhaust gas sensor comprising a body (12) adapted for connection to an exhaust gas conduit and provided with a circumferential groove (76) on its outer surface; a ceramic member (16) retained in a central aperture (70, 72, 74) in the body and having one end (26) projecting therethrough for location in the exhaust gas conduit; and a protector (18) surrounding the said one end of the ceramic member, the protector including a flange (78) which extends between the body and the ceramic member whereby the protector is secured and sealed in a gas tight manner to the body and the ceramic member, characterised in that the opposite sides of the flange are in direct contact with the body and the ceramic member respectively and the flange is compressed thereby forming the gas-tight seal between the body and the ceramic member, and in that the groove (76) is positioned directly radially outwardly of the flange.

2. An exhaust gas sensor of the type adapted for installation in a conduit for conveying exhaust gases from an internal combustion engine, the sensor having an oxygen sensing component (46) responsive to the partial pressure of oxygen in the exhaust gases to which the sensor is exposed, the component having an electrical characteristic which varies when at operating temperatures in the range from about 350°C to about 850°C with the partial pressure of oxygen in the exhaust gases, the sensor moreover comprising firstly a body (12) adapted for connection to the exhaust conduit of an internal combustion engine, the body having an aperture (70, 72, 74) extending axially through it, the aperture having at least two portions (70, 72) of different diameter and a transition surface (74) extending between the two diameters thereof, the larger diameter portion (70) of the aperture having an end (88) thereof suitable for crimping in a radially inward direction; secondly a ceramic member (16) having a projecting portion (26) adapted to extend into the exhaust conduit and to support the oxygen sensing component (46), and a central portion (80), the ceramic member being of generally circular cross-section along its length, the central portion being of diameter greater than the diameter of the projecting portion and being received within the larger diameter portion (70) of the aperture such that the projecting portion is adapted to project into an exhaust conduit when the body is installed therein, the projecting portion (26) of the ceramic member extending beyond the small diameter portion (72) of the aperture and thirdly a cylindrical metal protection tube (18) having perforations therein to permit exhaust gases to enter, the protection tube being received within the smaller diameter portion (72) of the aperture and surrounding the projecting portion (26) of the ceramic member extending beyond the body, characterised in that the protection tube (18) has a flange (78) extending in a radially outward direction, one side of the flange of the protection tube (18) being in direct contact with the transition surface (74) of the aperture and the other side of the flange being in direct contact with a mating portion of the ceramic member, the larger diameter portion (70) of the aperture being crimped at its end to produce a clamping force between the body and the ceramic member acting upon the flange of the protection tube, thereby to produce a seal that prevents flow of exhaust gases from the region in the protection tube between it and the projecting portion of the ceramic member through the area between the ceramic member central portion and the body, and in that the body has a circumferential groove (76) in its external surface directly radially outwardly of the flange (78) of the projection tube (18).

3. A gas sensor according to claim 1 or claim 2 wherein a space (86) is provided between the body (12) and the flange (78) to permit some deformation of the flange when a force is applied to the body and the ceramic member during crimping of the body portion.

## Patentansprüche

1. Abgasmessfühler, bestehend aus einem mit einem Abgaskanal verbindbaren und auf seiner Aussenseite mit einer Umfangsnute (76) versehenen Körper (12), einem in der Mittenöffnung (70, 72, 74) des Körpers gehaltenen keramischen Glied (16) mit einem zur Festlegung im Abgaskanal durch die Mittenöffnung vorstehenden Ende (26), und einer dieses eine Ende des keramischen Glieds umgebenden Schutzvorrichtung (18), wobei diese einen sich zwischen dem Körper und dem keramischen Glied erstreckenden Flansch (78) einschliesst, wodurch die Schutzvorrichtung gasdicht an dem Körper und dem keramischen Glied befestigt und abgedichtet ist, dadurch gekennzeichnet, dass die entgegengesetzten Seiten des Flanschs in direkter Berührung mit dem Körper bzw. dem keramischen Glied stehen und der Flansch dadurch unter Bildung der gasdichten Abdichtung zwischen dem Körper und dem keramischen Glied zusammengepresst wird, und dass sich die Nute (76) direkt radial auswärts von dem Flansch befindet.

2. Abgasmessfühler der zum Einbau in einen Abgasableitungskanal eines Verbrennungsmotors geeigneten Art, wobei der Messfühler einen Sauerstoff-Fühlerbaustein (46) aufweist, der auf den Sauerstoffpartialdruck in den den Messfühler beaufschlagenden Abgasen anspricht, wobei der Baustein eine elektrische Eigenschaft bestizt, die sich bei Betriebstemperaturen im Bereich von etwa 350°C bis etwa 850°C mit dem Sauerstoffpartialdruck in dem Abgasen ändert, wobei der Messfühler ferner aus erstens einem mit dem Abgaskanal eines Verbrennungsmotors verbindbaren Körper (12) mit einer axial durch ihn hindurch verlaufenden Oeffnung (70, 72, 74) mit mindestens zwei Teilen (70, 72) vershiedenen Durchmessers und einer sich zwischen deren beiden Durchmessern erstreckenden Uebergangsfläche (74), wobei der Teil (70) der Oeffnung mit grösserem Durchmesser ein in radialer Richtung nach innen umfaltbares Ende (88) aufweist, zweitens einem keramischen Glied (16) mit einem vorstehenden Teil (26), der in den Abgaskanal hineinragen und den Sauerstoff-Fühlerbaustein (46) tragen kann, und einem Mittelteil (80), wobei das keramische Glied entlang seiner Länge einen allgemein kreisförmigen Querschnitt aufweist, wobei der Mittelteil im Durchmesser grösser ist als der vorstehende Teil und so in dem Teil (70) der Oeffnung mit grösserem Durchmesser aufgenommen ist, dass der vorstehende Teil in einen Abgaskanal hineinragen kann, wenn der Körper darin eingebaut ist, wobei sich der vorstehende Teil (26) des keramischen Glieds über den Teil (72) der Oeffnung mit kleinerem Durchmesser hinweg erstreckt, und drittens einem zylindrischen Metallschutzrohr (18) mit den Eintritt von Abgasen gestattenden Durchbohrungen darin, wobei das Schutzrohr innerhalb des Teils (72) der Oeffnung mit kleinerem Durchmesser aufgenommen ist und den sich über den Körper hinaus erstreckenden, vorstehenden Teil (26) des keramischen Glieds umgibt, besteht, dadurch gekennzeichnet, dass das Schutzrohr (18) einen sich radial nach aussen erstreckenden Flansch (78) aufweist, wobei eine Seite des Flanschs des Schutzrohrs (18) in direkter Berührung mit der Uebergangsfläche (74) der Oeffnung und die andere Seite des Flanschs in direkter Berührung mit einem dazu passenden Teil des keramischen Glieds steht, wobei der Teil (70) der Oeffnung mit grösserem Durchmesser an seinem Ende umgefaltet ist, um zwischen dem Körper und dem keramischen Glied eine Spannkraft zu erzeugen, die auf den Flansch des Schutzrohrs einwirkt und dadurch eine Dichtung erzeugt, die eine Abgasströmung aus dem Bereich im Schutzrohr zwischen diesem und dem vorstehenden Teil des keramischen Glieds durch das Gebiet zwischen dem Mittelteil des keramischen Glieds und dem Körper verhindert, und dass der Körper in seiner Aussenfläche direkt radial auswärts von dem Flansch (78) des Schutzrohrs (18) eine Umfangsnute (76) besitzt.

3. Gasmessfühler nach Anspruch 1 oder 2, worin zwischen dem Körper (12) und dem Flansch (78) ein Zwischenraum (86) vorgesehen ist, um eine gewisse Verformung des Flanschs zuzulassen, wenn während des Umfaltens des Körperteils eine Kraft auf den Körper und das keramische Glied ausgeübt wird.

**Revendications**

1. Détecteur de gas d'échappement comprenant un corps (12) propre à être raccordé à un conduit de gaz d'échappement et pourvu d'une gorge circonférentielle (76) dans sa surface externe, un élément en céramique (16) retenu dans une ouverture centrale (70, 72, 74) du corps et comportant une extrémité (26) qui fait saillie au travers du corps en vue d'être placée dans le conduit de gaz d'échappement, et un élément protecteur (18) entourant ladite première extrémité de l'élément en céramique, l'élément protecteur présentant une collerette (78) qui s'étend entre le corps et l'élément en céramique et grâce à laquelle il est fixé et scellé d'une manière étanche au gaz, au corps et à l'élément en céramique, caractérisé en ce que les côtés opposés de la collerette sont en contact direct avec le corps et avec l'élément en céramique, la collerette est comprimée de manière à former le joint étanche au gaz entre le corps et l'élément en céramique et la gorge (76) est placée à un endroit situé directement à l'extérieur de la collerette dans le sens radial.

2. Détecteur de gaz d'échappement du type destiné à être installé dans un conduit d'évacuation des gaz d'échappement d'un moteur à combustion interne, ce détecteur comportant un élément sensible à l'oxygène (46) qui réagit à la pression partielle de l'oxygène dans les gaz d'échappement auxquels le détecteur est exposé et qui présente une caractéristique électrique variant, lorsqu'il est à des températures de fonctionnement comprises entre environ 350 et environ 350°C, avec la pression partielle de l'oxygène dans le gaz d'échappement, le détecteur comprenant, en outre, en premier lieu un corps (12) propre à être raccordé au conduit d'échappement d'un moteur à combustion interne et présentant une ouverture (70, 72, 74) qui le traverse axialement de part en part, l'ouverture comportant au moins deux parties (70, 72) de diamètres différents et une surface de transition (74) qui s'étend entre ses deux diamètres, la partie de plus grand diamètre (70) de l'ouverture comportant une extrémité (88) apte à être sertie radialement vers l'intérieur, en deuxième lieu un élément en céramique (16) comportant une partie saillante (26) propre à s'étendre dans le conduit d'échappement et à supporter l'élément sensible à l'oxygène (46), et une partie médiane (80), l'élément en céramique étant d'une section dans l'ensemble circulaire sur toute sa longueur, sa partie médiane étant d'un diamètre supérieur au diamètre de la partie saillante ou dépassante et étant reçue dans la partie de grand diamètre (70) de l'ouverture, de sorte que la partie saillante peut s'étendre dans un conduit d'échappement lorsque le corps y est installé, la partie saillante (26) de l'élément en ceramique s'étendant au-delà de la partie de petit diamètre (72) de l'ouverture, et en troisième lieu un tube de protection cylindrique en métal (18) comportant des perforations qui livrent passage aux gaz d'échappement, le tube de protection étant reçu dans la partie de plus petit diamètre (72) de l'ouverture et entourant la partie saillante (26) de l'élément en céramique qui s'étend au-delà du corps, caractérisé en ce que le tube de protection (18) comporte une collerette (78) qui s'étend radialement vers l'extérieur, une face de la collerette du tube de protection (18) étant en contact direct avec la surface de transition (74) de l'ouverture et l'autre face de la collerette étant en contact direct avec une partie correspondante de l'élément en céramique, la partie de plus grand diamètre (70) de l'ouverture étant sertie à son extrémité pour créer une force de serrage entre le corps et l'élément en céramique agissant sur la collerette du tube de protection de manière à produire un joint d'étanchéité qui empêche les gaz d'échappement de s'échapper de la région située dans le tube de protection par passage entre ce tube et la partie saillante de l'élément en céramique à travers la zone séparant la partie médiane de l'élément en céramique et le corps, et le corps (12) présente, dans sa surface externe, une gorge circonférentielle (76) située directement à l'extérieur dans le sens radial de la collerette (78) du tube de protection (18).

3. Détecteur de gaz suivant la revendication 1 ou 3 dans lequel un espace (£6) est prévu entre le corps (12) et la collerette (18) pour permettre une certaine déformation de la collerette lorsqu'une force est exercée sur le corps et sur l'élément en céramique pendant le sertissage du corps.

0 014 090

FIG. 1.

FIG. 2.

FIG. 3.

FIG. 4.